(19) Europäisches Patentamt
European Patent Office
Office européen des brevets

(11) EP 4 668 366 A1

(12) **EUROPEAN PATENT APPLICATION**
published in accordance with Art. 153(4) EPC

(43) Date of publication:
**24.12.2025 Bulletin 2025/52**

(21) Application number: **24756143.4**

(22) Date of filing: **06.02.2024**

(51) International Patent Classification (IPC):
***H01M 4/62*** *(2006.01)* ***H01M 10/00*** *(2006.01)*
***H01M 10/052*** *(2010.01)*

(52) Cooperative Patent Classification (CPC):
**H01M 4/62; H01M 10/00; H01M 10/052;**
Y02E 60/10

(86) International application number:
**PCT/CN2024/076200**

(87) International publication number:
**WO 2024/169769 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.02.2023 US 202363485032 P**

(71) Applicant: **Prologium Technology Co., Ltd.**
**Taoyuan City 320 (TW)**

(72) Inventor: **YANG, Szu-nan**
**Taoyuan City, Taiwan 320 (CN)**

(74) Representative: **Cabinet Chaillot**
**16/20, avenue de l'Agent Sarre**
**B.P. 74**
**92703 Colombes Cedex (FR)**

(54) **LITHIUM SECONDARY BATTERY CAPABLE OF SELF-POISONING**

(57) The invention provides a lithium secondary battery capable of self-poisoning, which includes a positive active material, a negative active material, an electrolyte located between the positive active material and the negative active material to allow lithium ions move therebetween, and a poisonous agent, including an initiating-reaction catalyst and a dopant. The dopant has a phosphorus-oxygen bond, a boron-oxygen bond or a sulfur-oxygen bond exposed at the free end, or a phosphorus-oxygen bond, a boron-oxygen bond or a sulfur-oxygen bond that is not exposed at the free end and is shielded by an organic or inorganic group. When the temperature of the lithium secondary battery reaches a first predetermined temperature, the dopant will react with the initiating-reaction catalyst to release at least one phosphorus-oxygen bond, boron-oxygen bond or sulfur-oxygen bond with free radicals or unsaturated bonds. Therefore, the positive active material of the lithium secondary battery will be contaminated to make the lithium secondary battery harmless.

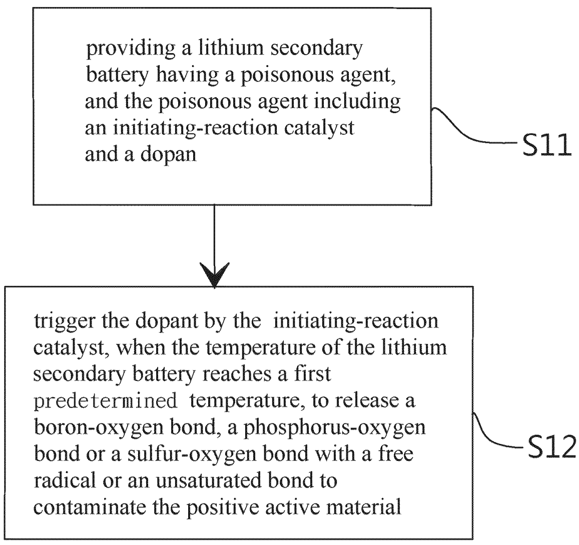


FIG. 1

EP 4 668 366 A1

## Description

## BACKGROUND OF THE INVENTION

### Field of Invention

The present invention relates to a lithium secondary battery, in particular to a lithium secondary battery capable of self-poisoning.

### Related Art

Because lithium-ion batteries are widely used in various products, such as vehicles, wearable products for consumers and industrial applications, portable devices and energy storage devices and so on, they are almost applied in all areas of human daily life. However, the event of accidents for the lithium-ion batteries are heard from time to time, such as the fire or explosion of mobile phone batteries and electric vehicles. These are all because the lithium ion batteries still lack comprehensive and effective solutions for safety issues.

The main cause of unsafe event for fire or explosion in the lithium secondary batteries is the thermal runaway. And the main cause of the thermal runaway of the lithium batteries is heat, which is the exothermic reactions result from the thermal cracking, induced by the elevated temperature, of the SEI (solid electrolyte interface) film, the electrolyte, the binder, and the positive and negative active materials in the battery. The current methods for suppression thermal runaway can be classified into two types: outside the lithium secondary battery and inside the lithium secondary battery, depending on the activated location for safety mechanism. For the type of outside the lithium secondary battery, a monitoring system is utilized, which uses digital arithmetic simulation. For the type of inside the lithium secondary battery, it can be further divided into physical or chemical methods. In the digital monitoring system outside the lithium secondary battery, the dedicated protection circuit and the dedicated management system on the outside of the lithium secondary battery are utilized to enhance the safety monitoring of the battery during the usage process. For the physical type of inside the lithium secondary battery, such as thermal shutdown separator, at elevated temperature for the battery cell, the holes of the separator are closed to block the passage of the ions. For the chemical type of inside the lithium secondary battery, it can be defined as a scale controlled type or an electrochemical reaction type. In the scale controlled type, the flame retardant is added into the electrolyte to control the scale of the thermal runaway. The examples of the electrochemical reaction types are as follows: 1) The monomer or oligomer is added into the electrolyte. The polymerization will be occurred when the temperature rises to reduce the rate of the ion migration. Therefore, the ionic conductivity decreases as the temperature rises, and the electrochemical reaction rate in the lithium secondary battery slows down; 2) A positive temperature coefficient (PTC) resistance material is sandwiched between the positive electrode layer or the negative electrode layer and the adjacent current collecting layer. When the temperature of the lithium secondary battery is elevated, the electrical insulation ability is enhanced. The electric power transmission efficiency between the positive electrode layer or the negative electrode layer and the adjacent current collecting layer is reduced and the electrochemical reaction rate is also decreased; and 3) A modified layer is formed on the surface of the positive active material. When the temperature of the battery cell is elevated, the modified layer is transformed into a dense film, which increases the resistance of the charge transfer to reduce the electrochemical reaction rate.

However, the above methods are aimed only for passive blocking the ion/electron migration pathway to reduce the heat generation, not for the rationale to cause the thermal runaway to eliminate the thermal runaway.

Therefore, this invention provides a lithium secondary battery capable of self-poisoning to aim at the positive active materials to solve the problem of thermal runaway from the lithium secondary batteries.

## SUMMARY OF THE INVENTION

It is a main objective of this invention to provide a lithium secondary battery capable of self-poisoning. The poisonous agent is activated when a state of charge (SOC) of the lithium secondary battery is not less than 50% and a temperature of the lithium secondary battery is near to an abnormally high temperature caused by itself. The phosphorus-oxygen bond, boron-oxygen bond or sulfur-oxygen bond with free radicals or unsaturated bonds is released to contaminate the positive active material of the lithium secondary battery to make the SOC of the lithium secondary battery be not more than 10% achieving harmlessness.

In order to implement the abovementioned, this invention discloses a lithium secondary battery capable of self-poisoning, which includes a positive active material; a negative active material; an electrolyte, located between the positive active material and the negative active material to allow lithium ions to move between the positive active material and the negative active material; and a poisonous agent, disposed in the lithium secondary battery and being activated when a temperature of the lithium secondary battery reaches a first predetermined temperature, wherein a state of charge of the

lithium secondary battery is not less than 50% at the first predetermined temperature. The poisonous agent includes an initiating-reaction catalyst and a dopant. The dopant has a phosphorus-oxygen bond, a boron-oxygen bond or a sulfur-oxygen bond exposed at a free end, or a phosphorus-oxygen bond, a boron-oxygen bond or a sulfur-oxygen bond that is not exposed at a free end and is shielded by an organic or inorganic group. Wherein at the first predetermined temperature, the initiating-reaction catalyst reacts with the dopant to release the phosphorus-oxygen bond, the boron-oxygen bond or the sulfur-oxygen bond with free radicals or unsaturated bonds to contaminate the positive active material to make the lithium secondary battery harmless.

The following detailed description through specific embodiments are presented to make it easier to understand the purpose, technical content, characteristics and effects of the present invention.

## BRIEF DESCRIPTION OF THE DRAWINGS

FIG. 1 is a flow diagram illustrating the self-poisoning process of the lithium secondary battery capable of self-poisoning of this invention.

## DETAILED DESCRIPTION OF THE INVENTION

The present invention will be described with respect to particular embodiments and with reference to certain drawings but the invention is not limited thereto but only by the claims. Any reference signs in the claims shall not be construed as limiting the scope. The drawings described are only schematic and are non-limiting. In the drawings, the size of some of the elements may be exaggerated and not drawn on scale for illustrative purposes.

The terminology used herein is for the purpose of describing particular embodiments only and is not intended to be limiting of the general inventive concept. As used herein, the singular forms "a", "an" and "the" are intended to include the plural forms as well, unless the context clearly indicates otherwise. Unless otherwise defined, all terms (including technical and scientific terms) used herein have the same meaning as commonly understood by one of ordinary skill in the art to which example embodiments belong. It will be further understood that terms, such as those defined in commonly used dictionaries, should be interpreted as having a meaning that is consistent with their meaning in the context of the relevant art and should not be interpreted in an idealized or overly formal sense unless expressly so defined herein.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

This invention relates to a lithium secondary battery capable of self-poisoning, which mainly includes a positive active material, a negative active material, an electrolyte, which is located between the positive active material and the negative active material and a poisonous agent, which is disposed in the lithium secondary battery. The material of the positive active material may be a positive active material with lithium cobalt nickel manganese oxygen compound, such as NCM811. The matrix of the negative active material may be a lithium metal, a material that can form an alloy with lithiums, such as silicon, or a material that can be inserted and extracted by lithiums, such as graphite. The electrolyte is located between the positive active material and the negative active material to allow lithium ions to move between the positive active material and the negative active material. The poisonous agent, which is disposed in the lithium secondary battery, is activated caused by a temperature of the lithium secondary battery when reaching a first predetermined temperature. At this time, a state of charge of the lithium secondary battery is not less than 50%.

The poisonous agent includes an initiating-reaction catalyst and a dopant. The dopant may have a phosphorus-oxygen bond, a boron-oxygen bond or a sulfur-oxygen bond at the free end. These phosphorus-oxygen bonds, boron-oxygen bonds or sulfur-oxygen bonds are bonded to a stable first group $R_1$, i.e. a structure of $Ax_1Oy_2-R_1$, wherein $x_1 \geqq 1$, $y_1 \geqq 1$, and A is selected from phosphorus, boron or sulfur. The above-mentioned "stable" means that compared with the phosphorus-oxygen bond, the boron-oxygen bond or the sulfur-oxygen bond, the stability of the first group $R_1$ in the electrolyte is higher. For example, the stability is higher due to the larger molecular weight. The dopant may also have a phosphorus-oxygen bond, a boron-oxygen bond or a sulfur-oxygen bond that is not exposed at the free end, and the phosphorus-oxygen bond, the boron-oxygen bond or the sulfur-oxygen bond is shielded by an organic or inorganic group, such as $R_2-Ax_2Oy_2-R_3$, wherein $x_2 \geqq 1$, $y_2 \geqq 1$, A is selected from phosphorus, boron or sulfur, and $R_2$ and $R_3$ may be organic or inorganic.

The initiating-reaction catalyst triggers the dopant or reacts with the dopant at the first predetermined temperature, so that the dopant releases at least one of the phosphorus-oxygen bond, the boron-oxygen bond or the sulfur-oxygen bond with free radicals or unsaturated bonds. These phosphorus-oxygen bonds, boron-oxygen bonds or sulfur-oxygen bonds with free radicals or unsaturated bonds can contaminate the positive active material of the lithium secondary battery.

The state of charge of the lithium secondary battery is reduced from the original not less than 50% to less than 10% to make the lithium secondary battery harmless and to effectively suppress the thermal runaway of the lithium secondary battery. The above-mentioned first predetermined temperature is close to or less than a critical temperature of the lithium secondary battery, which is an abnormally high temperature caused by itself, i.e. the thermal runaway initiating temperature. For example, the first predetermined temperature is not less than 100 °C, and preferably the first predetermined temperature is not less than 120 °C. The electrolyte may be an inorganic solid electrolyte, an organic solid electrolyte, a liquid electrolyte, a gel electrolyte, a jelly electrolyte, or a solid-liquid mixed electrolyte.

The contamination mentioned here refers to that the phosphorus-oxygen bonds, the boron-oxygen bonds or the sulfur-oxygen bonds with free radicals or unsaturated bonds react with the compositions of the positive active material. The reaction may be to generate new bonds, for example, to form a passivation layer by bonding with the surface of the positive active material, or the reaction may be to fill the lithium vacancies in the lattice of the positive active material. After filling the vacancies, the positive active material has a higher lattice stability and/or a lower oxygen release capacity than the positive active material lacking lithium to effectively suppress the thermal runaway of the lithium secondary battery. The state of charge of the lithium secondary battery is reduced to less than 10% to achieve the so-called harmlessness.

Accordingly, it can be known that the self-poisoning process of the lithium secondary battery capable of self-poisoning of this invention includes the following steps. First, in step of S1, a lithium secondary battery is provided, which has a poisonous agent. The poisonous agent includes an initiating-reaction catalyst and a dopant. The lithium secondary battery is in a state of capable of normal charging and discharging. Then in step of S2, when the temperature of the lithium secondary battery, caused from abnormally heat generation by itself, reaches a first predetermined temperature, the initiating-reaction catalyst will trigger the dopant to release a boron-oxygen bond, a phosphorus-oxygen bond or a sulfur-oxygen bond with a free radical or an unsaturated bond to poison or contaminate the positive active material of the lithium secondary battery to render the lithium secondary battery to be failed. The above-mentioned condition that the temperature of the lithium secondary battery is raised abnormally may be caused by an internal short circuit of the lithium secondary battery during the charging and discharging operation or a discharging caused by puncture of an external objection. Furthermore, in order to distinguish the lithium secondary battery of this invention from a lithium secondary battery that has lost its charging performance and is considered to be discarded or invalid, the state of charge (SOC) is further defined that the SOC of the lithium secondary battery of this invention is at least 50% when triggering the self-poisoning process.

The above-mentioned initiating-reaction catalyst may be a compound containing a hydrohalic acid, for example, a first salt containing fluorine. The electrolyte is saturated to dissolve at least one second salt. The second salt is used to provide lithium ions for the charging and discharging operation of the lithium secondary battery, so the first salt is in a non-dissolved state in the electrolyte. Moreover, the first salt and the second salt may be different. For example, the first salt may be lithium hexafluorophosphate ($LiPF_6$). However, the compounds with hexafluorophosphate ions ($PF6^-$) are relatively unstable and easily form low hydrocarbons such as alkanes or alkenes. Therefore, the first salt containing fluorine may be selected from potassium tetrafluoroborate ($KBF_4$), sodium tetrafluoroborate ($NaBF_4$), lithium tetrafluorobismuth ($LiBiF_4$), lithium hexafluoroborate ($LiBF_6$), lithium hexafluoroarsenate ($LiAsF_6$) or lithium heptafluorosulfur ($LiSF_7$), or potassium hexafluoroborate ($KPF_6$) or sodium hexafluoroborate ($NaPF_6$) that can make hexafluorophosphate ($PF6^-$) more stable than lithium (Li) or ammonium ($NH_4$).

Another form of the dopant is a chemical formula of $Ax_3By_3Cz_3$, where A is selected from lithium, sodium, potassium or ammonium ($NH_4$), $By_3Cz_3$ is selected from a phosphorus-fluorine bond or a boron-fluorine bond, and $x3 \geqq 1$, $y3 \geqq 1$, $z3 \geqq 1$. For example, the dopant is lithium tetrafluoroborate ($LiBF_4$), sodium tetrafluoroborate ($NaBF_4$), potassium tetrafluoroborate($KBF_4$), lithium hexafluoroborate ($LiBF_6$), lithium hexafluoroarsenate ($LiAsF_6$), lithium heptafluorosulfur ($LiSF_7$) or a mixture of the above materials.

For example, when the initiating-reaction catalyst is lithium hexafluorophosphate and the dopant is lithium tetrafluoroborate, the following chemical equations 1-5 will be performed to produce the boron-oxygen bond with the free radical or the unsaturated bond to contaminate the positive electrode.

$$LiPF_6 \rightarrow LiF + PF_5 \ldots.(1)$$

$$PF_5 + H_2O \rightarrow POF_3 + HF \ldots.(2)$$

$$LiBF_4 + \mathrm{HF} \rightarrow BF_3 + LiF \ldots.(3)$$

$$BF_3 + 3H_2O \rightarrow 3HF + H_3BO_3 \ldots.(4)$$

$$H_3BO_3 \rightarrow H^+ + H_2O + BO_2^- \ldots.(5)$$

The water in the above chemical reaction may come from a trace water in the lithium secondary battery, or may be formed by the reaction of the hydrofluoric acid (HF) with the positive active material, the negative active material or the carbonate organic solvent contained in the electrochemical reaction system. For example, the carbonate organic solvent may be ethylene carbonate (EC) or propylene carbonate (PC). Moreover, when the lithium secondary battery has a ceramic separator, the water in the above chemical reaction may come from the water generated by the reaction of the hydrofluoric acid with the ceramic separator. The main material of the ceramic separator may be an oxide material as the main structure, and the oxide material may have a good conductor of lithium ions, such as a solid electrolyte, or a conductor of non-lithium ions. When the oxide is a solid electrolyte that can transfer lithium ions, it may be lithium aluminum titanium phosphate (LATP), lithium aluminum germanium phosphate (LAGP), lithium lanthanum zirconium oxide (LLZO), $LiAlSiO_4$. When the oxide is an oxide that is passive in the ability to transfer lithium ions, it may be aluminum oxide. For example, when the oxide is aluminum oxide, it may release water after being attacked by hydrofluoric acid, as shown in the following chemical equation 6.

$$Al_2O_3 + 6HF \rightarrow 2AlF_3 + 3H_2O \ldots..(6)$$

As mentioned above, when the dopant releases the sulfur-oxygen bond with the free radical or the unsaturated bond and the sulfur-oxygen bond is located at the free end of the dopant, the dopant may be sodium trifluoromethanesulfinate ($CF_3SO_2Na$), perfluorobutanesulfonic acid ($C_4F_9SO_3H$), sodium perfluorobutanesulfonate ($C_4F_9SO_3Na$), or potassium perfluorobutanesulfonate ($C_4F_9SO_3K$). Furthermore, when the sulfur-oxygen bond is in the form of bonding with the first group $R_1$, the first group $R_1$ may be a compound having a carbon chain with at least one carbon atom, so that the dopant can be relatively stable in the electrochemical reaction system before reaching the first predetermined temperature. Before reaching the first predetermined temperature, the initiating-reaction catalyst is inactive in the lithium secondary battery. When reaching the first predetermined temperature, the initiating-reaction catalyst is released to break the bond between the sulfur-oxygen bond and the first group $R_1$ to form the sulfur-oxygen bond with the free radical or the unsaturated bond. The first group $R_1$ may be an alkyl group, an ether group, an aryl group, an aralkyl group or an alkylaryl group. The structural of the first group $R_1$ may determine whether the dopant is insoluble or soluble in different solvents. The soluble herein means that the dopant can be dissolved in a solvent of a liquid electrolyte, a gel electrolyte or a jelly electrolyte, such as propylene carbonate (PC), or in a plasticizer of a solid polymer electrolyte. When the dopant is added to a lithium secondary battery, the amount of the dopant dissolved in these solvents or plasticizers is more than 1% of the weight of these solvents or plasticizers.

The initiating-reaction catalyst of the lithium secondary battery of this invention may also be selected from borofluoride compounds or aluminum halide compounds. The borofluoride compounds may be potassium tetrafluoroborate ($KBF_4$), sodium tetrafluoroborate ($NaBF_4$) or ammonium tetrafluoroborate ($NH_4BF_4$), etc., and the aluminum halide compound may be aluminum chloride ($AlCl_3$) or aluminum bromide ($AlBr_3$), etc.

The sulfur-oxygen bond with the free radical or the unsaturated bond is located at the side of the dopant, which has the ability to contaminate the positive active material. Due to the first group $R_1$ is a relatively stable molecular form, the presence of the first group can reduce the degree of contamination of the positive active material by the sulfur-oxygen bond before the first predetermined reaction temperature is reached. However, this also means that the real-time suppressing effect of the dopant with such sulfur-oxygen bond on the lithium secondary battery before the thermal runaway is initiated will be reduced. In this regard, in this application, the initiating-reaction catalyst with a bond-breaking effect is used to break the bond between the first group $R_1$ and the sulfur-oxygen bond at the first predetermined temperature. The first group $R_1$ is separated from the sulfur-oxygen bond, and the sulfur oxide radical has a stronger migration ability, so as to increase the effect of contaminating the positive active material. The reversibility/activity of the positive active material is reduced to suppress the thermal runaway of the lithium secondary battery.

In this invention, the sulfur-oxygen bond of the dopant may be in a shielded state, that is, a state that not exposed at the free end, such as LiFSi (lithium bis(fluorosulfonyl)imide) or sodium salt, F-$(SO_2)$-$N^-$-$(SO_2)$-$FM^+$, where M represents lithium or sodium, 3-phenylsulfonylbenzenesulfonic acid, peroxydisulfuric acid, potassium peroxydisulfate, sodium peroxydisulfate. These shielded or non-free-end forms are used to avoid or decrease the release of the dopant during the normal charging and discharging operation of the lithium secondary battery or the related manufacturing process after mixing with the lithium secondary battery, thereby affecting the utilization rate of the lithium secondary battery. In this embodiment, the dopant is the sulfur-oxygen bond with a second group $R_2$ and a third group $R_3$ bonded to both ends thereof. $R_2$ and $R_3$ are the same or different organic or inorganic groups. The dopant is essentially inactive chemically in the lithium secondary battery until the initiating-reaction catalyst attacks the dopant to cut off the bonding between $R_2$ and/or $R_3$ and the sulfur-oxygen bond, so that the sulfur-oxygen bond has the free radical or the unsaturated bond to begin to contaminate the positive active material. For example, when the dopant is a structure in which the sulfur-oxygen bond is not

exposed at the free end, the structure of these dopants may be sulfinic acid group (

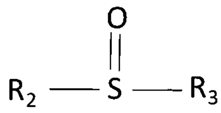

) or sulfonyl group (

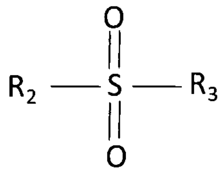

), where $R_2$ and $R_3$ are organic groups or inorganic groups.

The above sulfur-oxygen bond may be

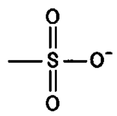 , 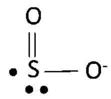 , 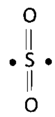 or 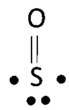 .

For example, the dopant with the structure of

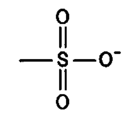

may be sodium octyl sulfate, hexyl sulfate, sodium salt , sodium ethyl sulfate, sodium 1-octanesulfonate monohydrate, 1-octanesulfonic acid sodium salt, sodium 1-heptanesulfonate, sodium hexanesulfonate, sodium dodecyl sulfate, sodium dodecylbenzenesulfonate, sodium 2-ethylhexyl sulfate, sodium ethyl sulfate, potassium nonafluoro-1-butanesulfonate, trifluoromethanesulfonyl chloride, 4-(3-butyl-1-imidazolio)-1-butanesulfonate, 3-(1-pyridinio)-1-propanesulfonate, dimethyl-2-hydroxyethylammoniumpropane sulfonate, 3-(decyldimethylammonio)-propane-sulfonate inner salt, [2-(methacryloyloxy)ethyl]dimethyl-(3-sulfopropyl)ammonium hydroxide, 1-ethyl-3-methylimidazolium ethyl sulfate, Copper(I) trifluoromethanesulfonate benzene complex, 1-ethyl-3-methylimidazolium trifluoromethanesulfonate, 1-Fluoropyridinium triflate, 4-formyl-1-methylpyridinium benzenesulfonate, 3-hydroxynaphthalene-2,7-disulfonic acid disodium salt, potassium benzene-1,2-disulfonate, lithium trifluoromethanesulfonate, potassium trifluoromethanesulfonate, sodium bisulfite solution, sodium metabisulfite, sodium thiosulfate, sodium 1-butanesulfonate, potassium diphenylsulfone sulfonate, heptadecafluorooctanesulfonic acid potassium salt), or a mixture of two or more of the above materials.

For example, the first compound with the structure of

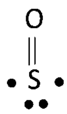

may be phenyl vinyl sulfoxide, propyl sulfoxide, methyl phenyl sulfoxide, diisobutyl sulfoxide, dodecyl methyl sulfoxide, benzyl phenyl sulfoxide, dimethyl sulfite, benzenesulfinic acid sodium salt, sodium methanesulfinate, sodium p-toluenesulfinate, sodium bisulfite solution), or a mixture of two or more of the above materials.

For example, the first compound with the structure of

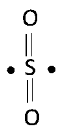

may be 4-(trifluoromethyl)benzenesulfonyl chloride, 4-chlorobenzenesulfonyl chloride, 3-(trifluoromethyl)benzenesulfonyl chloride, 4-fluorobenzenesulfonyl chloride, trifluoromethanesulfonic anhydride, methanesulfonyl chloride, p-toluenesulfonyl chloride, 4-toluenesulfonyl chloride, 3-hydroxynaphthalene-2,7-disulfonic acid disodium salt, isobutanesulfonyl chloride, cyclohexanesulfonyl chloride, 4-methoxybenzenesulfonyl chloride, 4-bromobenzenesulfonyl chloride, 4-(trifluoromethyl)benzenesulfonyl chloride, 4-iodobenzenesulfonyl chloride, 4-fluorobenzenesulfonyl chloride, 4-nitrobenzenesulfonyl chloride, biphenyl-4-sulfonyl chloride, biphenyl-4,4'-disulfonyl chloride, 4-(aminosulfonyl)benzenesulfonyl chloride), or a mixture of two or more of the above materials.

The compounds having the phosphorus-oxygen bond serving as the dopant may be copper(II) pyrophosphate hydrate, aluminum phosphate, calcium phosphate dibasic, sodium phosphate dibasic, sodium phosphate monobasic, sodium phosphate, potassium phosphate monobasic, potassium phosphate tribasic, potassium phosphate dibasic, sodium pyrophosphate tetrabasic, iron(III) pyrophosphate, sodium tripolyphosphate, potassium pyrophosphate, 1,10-decyldiphosphonic acid, (12-phosphonododecyl)phosphonic acid, dibutyl phosphite, dimethyl phosphite, diethyl phosphite, bis(2-ethylhexyl) phosphate, dibenzyl phosphite, triethyl phosphite, di-tert-butyl phosphite, triethyl phosphate, diethyl allyl phosphate, diethyl allylphosphonate, diethyl vinylphosphonate, dimethyl vinylphosphonate, diallyl phosphite, diethyl benzylphosphonate, diethylenetriaminepentakis(methylphosphonic acid), diethyl ethylphosphonate, diethyl isocyanomethylphosphonate, diethyl (methylthiomethyl)phosphonate, diethyl (difluoromethyl)phosphonate, Tris(2,2,2-trifluoroethyl) phosphite, diethyl methylphosphonate, Eaton reagent or a mixture of at least two of the above materials.

The compounds having the boron-oxygen bond serving as the dopant may be 2-acetylaminophenylboronic acid pinacol ester, 3-acetyl-2-fluorophenylboronic acid, 3-acetylphenylboronic acid, 4-acetylphenylboronic acid, phenylboronic acid, 4-amino-3-nitrophenylboronic acid, 2-aminophenylboronic acid pinacol ester, 3-aminophenylboronic acid, 3-aminophenylboronic acid pinacol ester, 2-aminopyrimidine-5-boronic acid, bis(pinacolato)diboron, boric acid, 4-bromobutylboronic acid, 2-bromo-3-ethoxy-6-fluorophenylboronic, 4-bromomethylphenylboronic acid pinacol ester, n-butylboronic acid pinacol ester, borax, lithium bis(oxalato)borate , or a mixture of two or more of the above materials.

When the poisonous agent is in the insoluble form, the poisonous agent may be adjacent to or directly contact the positive active material. For example, the poisonous agent is mixed with the particles of the positive active material to randomly distribute between the particles of the positive active material, or the poisonous agent is coated on the surface of the positive active material. The electrolyte of the lithium secondary battery having such poisonous agent may be a solid electrolyte, a semi-solid electrolyte, a liquid electrolyte or a mixture thereof.

When the poisonous agent is in the soluble form, the poisonous agent may be mixed in the electrolyte system. The electrolyte of the lithium secondary battery in this form may be a pure liquid electrolyte, a pure gel electrolyte, a pure jelly electrolyte or a pure solid polymer electrolyte, or a mixture thereof. Moreover, the above-mentioned electrolyte may also be mixed with an oxide solid electrolyte.

Accordingly, this invention provides a lithium secondary battery capable of self-poisoning, which adds a poisonous agent. When a temperature of the lithium secondary battery reaches a first predetermined temperature and a state of charge of the lithium secondary battery is not less than 50%, the poisonous agent will release a phosphorus-oxygen bond, a boron-oxygen bond or a sulfur-oxygen bond with free radicals or unsaturated bonds to contaminate the positive active material of the lithium secondary battery. The lattice of the positive active material is stabilized to avoid or reduce the precipitation of oxygen atoms. And the SOC of the lithium secondary batter becomes not more than 10%, presenting the poisoned state to lose the charging and discharging ability, so as to effectively suppress the occurrence of thermal runaway.

The above description is only a preferred embodiment of this invention and is not intended to limit the scope of the claims. Therefore, any equivalent variations or modifications made in accordance with the features and spirit of this invention should be included within the scope of the following claims.

## Claims

**1.** A lithium secondary battery capable of self-poisoning, comprising:

a positive active material;
a negative active material;
an electrolyte, located between the positive active material and the negative active material to allow lithium ions to move between the positive active material and the negative active material; and
a poisonous agent, being activated when a temperature of the lithium secondary battery reaches a first predetermined temperature, wherein a state of charge of the lithium secondary battery is not less than 50% at the first predetermined temperature, and the poisonous agent including:

an initiating-reaction catalyst; and

a dopant, having a phosphorus-oxygen bond, a boron-oxygen bond or a sulfur-oxygen bond exposed at a free end, or a phosphorus-oxygen bond, a boron-oxygen bond or a sulfur-oxygen bond that is not exposed at a free end and is shielded by an organic or inorganic group, wherein at the first predetermined temperature, the initiating-reaction catalyst reacts with the dopant to release at least one of the phosphorus-oxygen bond, the boron-oxygen bond or the sulfur-oxygen bond with free radicals or unsaturated bonds to contaminate the positive active material;
wherein the first predetermined temperature is not less than 100°C.

2. The lithium secondary battery capable of self-poisoning according to claim 1, wherein the initiating-reaction catalyst is a boron fluoride compound, an aluminum halide compound or a hydrohalic acid compound.

3. The lithium secondary battery capable of self-poisoning according to claim 2, wherein when the initiating-reaction catalyst is the boron fluoride compound, the initiating-reaction catalyst is potassium tetrafluoroborate ($KBF_4$), sodium tetrafluoroborate ($NaBF_4$) or ammonium tetrafluoroborate ($NH_4BF_4$), and when the initiating-reaction catalyst is the aluminum halide compound, the initiating-reaction catalyst is aluminum chloride ($AlCl_3$) or aluminum bromide ($AlBr_3$).

4. The lithium secondary battery capable of self-poisoning according to claim 1, wherein when the initiating-reaction catalyst is the hydrohalic acid compound, the initiating-reaction catalyst is a first salt containing fluorine, the electrolyte is saturated to dissolve at least a second salt, wherein the first salt is in a non-dissolved state in the lithium secondary battery, and the first salt is different from the second salt.

5. The lithium secondary battery capable of self-poisoning according to claim 4, wherein the first salt is lithium hexafluorophosphate ($LiPF_6$).

6. The lithium secondary battery capable of self-poisoning according to claim 1, wherein the dopant is $A_xB_yF_z$, wherein A is selected from lithium, sodium or ammonium ($NH_4$), $B_yF_z$ is selected from a phosphorus-fluorine bond or a boron-fluorine bond, and wherein $x \geqq 1$, $y \geqq 1$ and $z \geqq 1$.

7. The lithium secondary battery capable of self-poisoning according to claim 6, wherein the dopant is $KBF_4$, $NaBF_4$, $LiBF_4$, $LiBF_6$, $LiSF_7$ or a mixture of at least two of the above materials.

8. The lithium secondary battery capable of self-poisoning according to claim 1, further comprising a ceramic separator, and the initiating-reaction catalyst reacts with the ceramic separator to release water.

9. The lithium secondary battery capable of self-poisoning according to claim 8, wherein a main material of the ceramic separator is selected from an oxide solid electrolyte or a passive ceramic powder that cannot transfer lithium ions.

10. The lithium secondary battery capable of self-poisoning according to claim 1, wherein the initiating-reaction catalyst reacts with a carbonate organic solvent in the electrolyte to release water.

11. The lithium secondary battery capable of self-poisoning according to claim 1, wherein when the dopant has the phosphorus-oxygen bond, the boron-oxygen bond or the sulfur-oxygen bond exposed at the free end, the sulfur-oxygen bond is bonded to a first group, and the first group is a carbon chain having at least one carbon atom, and the initiating-reaction catalyst triggers to break the sulfur-oxygen bond and the first group.

12. The lithium secondary battery capable of self-poisoning according to claim 11, wherein the first group is an alkyl group, an ether group, an aryl group, an aralkyl group or an alkylaryl group.

13. The lithium secondary battery capable of self-poisoning according to claim 1, wherein when the dopant has the phosphorus-oxygen bond, the boron-oxygen bond or the sulfur-oxygen bond exposed at the free end, and both ends of the phosphorus-oxygen bond, the boron-oxygen bond or the sulfur-oxygen bond are shielded by the organic group or the inorganic group, the organic groups or the inorganic groups at both ends are the same, and the initiating-reaction catalyst cuts a bond between at least one of the organic group or the inorganic group and the phosphorus-oxygen bond, the boron-oxygen bond or the sulfur-oxygen bond to make the phosphorus-oxygen bond, the boron-oxygen bond or the sulfur-oxygen bond have a free radical or an unsaturated bond.

14. The lithium secondary battery capable of self-poisoning according to claim 1, wherein when the dopant has the phosphorus-oxygen bond, the boron-oxygen bond or the sulfur-oxygen bond exposed at the free end, and both ends

are shielded by the organic group or the inorganic group, the organic groups or the inorganic groups at both ends are different, and the initiating-reaction catalyst cuts a bond between at least one of the organic group or the inorganic group and the phosphorus-oxygen bond, the boron-oxygen bond or the sulfur-oxygen bond to make the phosphorus-oxygen bond, the boron-oxygen bond or the sulfur-oxygen bond have a free radical or an unsaturated bond.

**15.** The lithium secondary battery capable of self-poisoning according to claim 1, wherein the first predetermined temperature is more than 120°C.

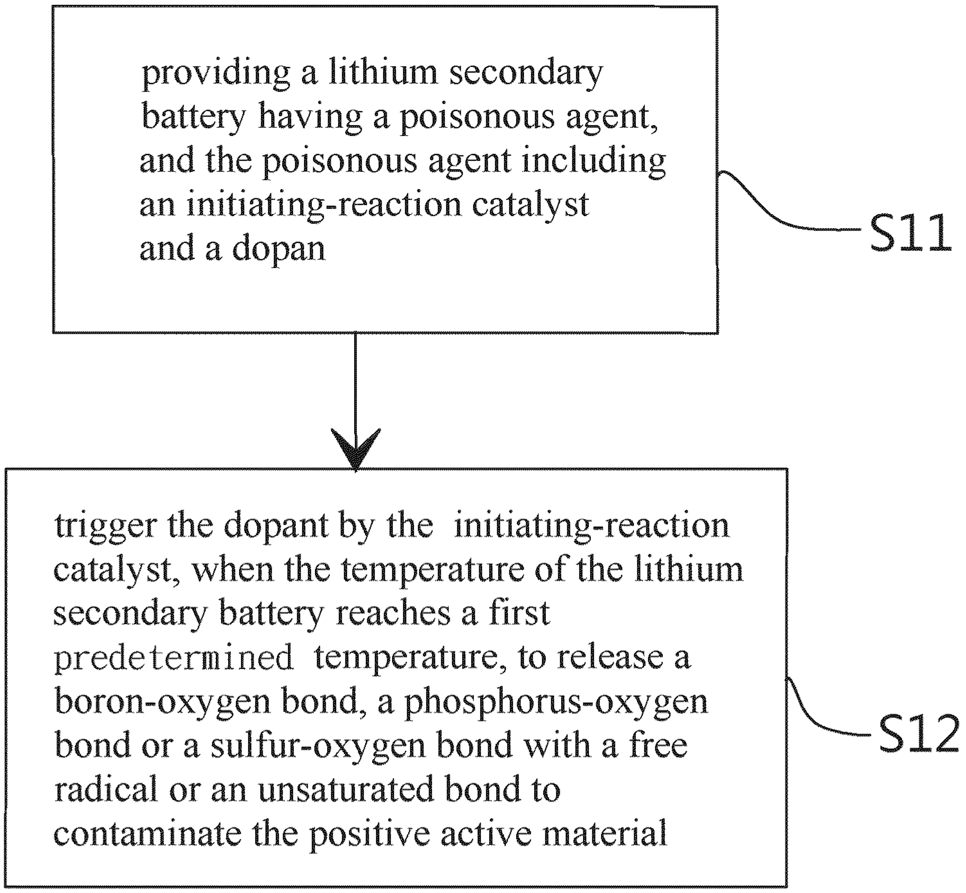
providing a lithium secondary battery having a poisonous agent, and the poisonous agent including an initiating-reaction catalyst and a dopan
S11
trigger the dopant by the initiating-reaction catalyst, when the temperature of the lithium secondary battery reaches a first predetermined temperature, to release a boron-oxygen bond, a phosphorus-oxygen bond or a sulfur-oxygen bond with a free radical or an unsaturated bond to contaminate the positive active material
S12

FIG. 1

## INTERNATIONAL SEARCH REPORT

International application No.
**PCT/CN2024/076200**

### A. CLASSIFICATION OF SUBJECT MATTER

H01M 4/62(2006.01)i; H01M10/00(2006.01)i; H01M10/052(2010.01)i

According to International Patent Classification (IPC) or to both national classification and IPC

### B. FIELDS SEARCHED

Minimum documentation searched (classification system followed by classification symbols)

IPC: H01M4, H01M10

Documentation searched other than minimum documentation to the extent that such documents are included in the fields searched

Electronic data base consulted during the international search (name of data base and, where practicable, search terms used)

CJFD, CNTXT, ENTXTC, CAPLUS(STN), ISI_Web of Science: 掺染, 掺染剂, 毒化, 毒化剂, 二次电池, 反应起始催化剂, 隔离层, 隔膜, 活化, 磷氧键, 硫氧键, 六氟磷酸锂, 六氟硼钾, 六氟硼钠, 六氟锂硼, 六氟锂砷, 铝卤化物, 氯化铝, 硼氟化合物, 硼氟化物, 硼氧键, 七氟锂硫, 氢卤酸化合物, 热失控, 四氟钾硼, 四氟钠硼, 四氟锂硼, 陶瓷, 污染, 正极活性材料, 溴化铝, 锂二次电池, AlBr3, AlCl3, KBF4, KPF6, LiAsF6, LiBF4, LiBF6, LiFSi, LiPF6, LiSF7, NaBF4, NABF4, NaPF6, NH4BF4, SOC, +BF4, Lithium secondary battery, positive electrode active material, thermal runaway, aluminate ion, phosphate ion, pyrophosphate anion

### C. DOCUMENTS CONSIDERED TO BE RELEVANT

| Category* | Citation of document, with indication, where appropriate, of the relevant passages | Relevant to claim No. |
|---|---|---|
| A | CN 114464887 A (SHENZHEN CAPCHEM TECHNOLOGY CO., LTD.) 10 May 2022 (2022-05-10)<br>claim 1 | 1-15 |
| A | CN 110518232 A (NINGDE CONTEMPORARY AMPEREX TECHNOLOGY CO., LTD.) 29 November 2019 (2019-11-29)<br>claims 1-12 | 1-15 |
| A | CN 101507041 A (MITSUBISHI CHEMICAL CORP.) 12 August 2009 (2009-08-12)<br>claims 1-30 | 1-15 |
| A | CN 103493279 A (NISSAN MOTOR CO., LTD. et al.) 01 January 2014 (2014-01-01)<br>claims 1-7, and description, paragraphs 85-91 | 1-15 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **06 May 2024** | **10 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

INTERNATIONAL SEARCH REPORT

International application No.
**PCT/CN2024/076200**

**C. DOCUMENTS CONSIDERED TO BE RELEVANT**

| Category* | Citation of document, with indication, where appropriate, of the relevant passages | Relevant to claim No. |
|---|---|---|
| A | CN 106340651 A (SHENZHEN INSTITUTES OF ADVANCED TECHNOLOGY, CHINESE ACADEMY OF SCIENCES) 18 January 2017 (2017-01-18) claims 1-12 | 1-15 |
| A | EP 1213782 A2 (WILSON GREATBATCH LTD.) 12 June 2002 (2002-06-12) claims 1-13 | 1-15 |
| A | US 2009061303 A1 (TOSHIBA K. K.) 05 March 2009 (2009-03-05) claims 1-16 | 1-15 |
| A | JP 2023012936 A (CP ENERGY INC.) 26 January 2023 (2023-01-26) claims 1-14 | 1-15 |

**INTERNATIONAL SEARCH REPORT**
**Information on patent family members**

International application No.
**PCT/CN2024/076200**

| Patent document cited in search report | Publication date (day/month/year) | Patent family member(s) | Publication date (day/month/year) |
|---|---|---|---|
| CN 114464887 A | 10 May 2022 | WO 2023124604 A1 | 06 July 2023 |
| | | EP 231406 A1 | 23 August 2023 |
| CN 110518232 A | 29 November 2019 | US 2023246184 A1 | 03 August 2023 |
| | | US 2022052338 A1 | 17 February 2022 |
| | | ES 2934943 T3 | 28 February 2023 |
| | | EP 3951946 A1 | 09 February 2022 |
| | | EP 3951946 A4 | 15 June 2022 |
| | | EP 3951946 B1 | 30 November 2022 |
| | | WO 2020220662 A1 | 05 November 2020 |
| | | EP 4148830 A2 | 15 March 2023 |
| | | EP 4148830 A3 | 05 April 2023 |
| | | EP 4148830 B1 | 09 August 2023 |
| CN 101507041 A | 12 August 2009 | KR 20150045528 A | 28 April 2015 |
| | | JP 2008140767 A | 19 June 2008 |
| | | JP 5292743 B2 | 18 September 2013 |
| | | KR 20140040280 A | 02 April 2014 |
| | | KR 101495012 B1 | 24 February 2015 |
| | | EP 2061115 A1 | 20 May 2009 |
| | | EP 2061115 A4 | 28 September 2011 |
| | | EP 2061115 B1 | 01 April 2015 |
| | | JP 2013056829 A | 28 March 2013 |
| | | JP 5768801 B2 | 26 August 2015 |
| | | WO 2008023744 A1 | 28 February 2008 |
| | | US 2009286155 A1 | 19 November 2009 |
| | | KR 20090042979 A | 04 May 2009 |
| | | KR 101539780 B1 | 27 July 2015 |
| CN 103493279 A | 01 January 2014 | US 2014017574 A1 | 16 January 2014 |
| | | US 9466855 B2 | 11 October 2016 |
| | | TW 201240188 A | 01 October 2012 |
| | | TWI 456819 B | 11 October 2014 |
| | | WO 2012132813 A1 | 04 October 2012 |
| | | EP 2693556 A1 | 05 February 2014 |
| | | EP 2693556 A4 | 17 September 2014 |
| | | EP 2693556 B1 | 06 June 2018 |
| | | JP 2013048077 A | 07 March 2013 |
| | | JP 6086467 B2 | 01 March 2017 |
| CN 106340651 A | 18 January 2017 | None | |
| EP 1213782 A2 | 12 June 2002 | EP 1213782 A3 | 12 November 2003 |
| | | JP 2002198092 A | 12 July 2002 |
| | | CA 2353751 A1 | 27 May 2002 |
| US 2009061303 A1 | 05 March 2009 | JP 2009054319 A | 12 March 2009 |
| | | JP 5319899 B2 | 16 October 2013 |
| | | US 8728670 B2 | 20 May 2014 |
| | | JP 2013080714 A | 02 May 2013 |
| | | CN 101373848 A | 25 February 2009 |
| | | CN 104953174 A | 30 September 2015 |
| JP 2023012936 A | 26 January 2023 | WO 2023286399 A1 | 19 January 2023 |
| | | JP 7082737 B1 | 09 June 2022 |
| | | TW 202312540 A | 16 March 2023 |

Form PCT/ISA/210 (patent family annex) (July 2022)

**INTERNATIONAL SEARCH REPORT**
**Information on patent family members**

International application No.
**PCT/CN2024/076200**

| Patent document cited in search report | Publication date (day/month/year) | Patent family member(s) | Publication date (day/month/year) |
|---|---|---|---|
| | | KR 20240032845 A | 12 March 2024 |

Form PCT/ISA/210 (patent family annex) (July 2022)